# EUROPEAN PATENT APPLICATION

(11) **EP 1 526 666 A2**
(43) Date of publication of application: **27.04.2005**
(21) Application number: 04007797.6
(22) Date of filing: 31.03.2004
(51) Int. Cl.: H04H 1/00

(54) **Digital broadcast system and method for providing a broadcast service with area-specific additional information**

(30) Priority: 21.10.2003 KR 2003073374
(71) Applicant: Samsung Electronics Co., Ltd., Suwon-si, Gyeonggi-do (KR)
(72) Inventor: Lee, Sang-Hyuk, Yeongtong-gu Suwon-si Gyeonggi-do (KR)
(74) Representative: Lang, Johannes, Dipl.-Ing.

(57) **Abstract**

A digital broadcast system is disclosed that real-time transmits additional information broadcast data specialized for area and time information to receivers located in a prescribed area via a gap filler. The digital broadcast system includes a satellite control station, a gap filler, and a receiver. The satellite control station assigns additional area ID codes to individual area-specialized additional information broadcast data, and transmits the area-specialized additional information broadcast assigned the additional area ID codes over a prescribed broadcast channel. The gap filler receives broadcast data, and determines whether the area ID code is contained in the received broadcast data. If it is determined that the determined area ID code is equal to desired area-specialized additional information broadcast data, the gap filler amplifies the output level of the received broadcast data, and transmits the amplified broadcast data to a shadow area. The receiver receives the re-transmitted broadcast data, and displays the area-specialized additional information broadcast data.

## Description

### BACKGROUND OF THE INVENTION

### 1. Field of the Invention

The present invention relates to a digital broadcast system, and more particularly to a digital broadcast system for providing area-specialized additional information broadcast data and a broadcast service method using the same.

### 2. Description of the Related Art

In recent times, with the increasing development of technologies for compressing and communicating a variety of data such as audio and video data, there has been newly proposed a Digital Multimedia Broadcasting (DMB) service capable of providing a user or subscriber with high-quality audio and video data from anywhere he or she wishes. The DMB system has been called a Digital Audio Broadcasting (DAB) system, a Digital Radio Broadcasting (DRB) system, or a Digital Audio Radio system, etc. It should be noted that the term DMB is generically used to identify all of the aforementioned systems in the present invention. The mobile multimedia broadcast system can enable the user to receive broadcast information composed of a variety of contents such as music, text, and moving image data while the user is in motion, and can also enable the user to receive the same broadcast information at a fixed place.

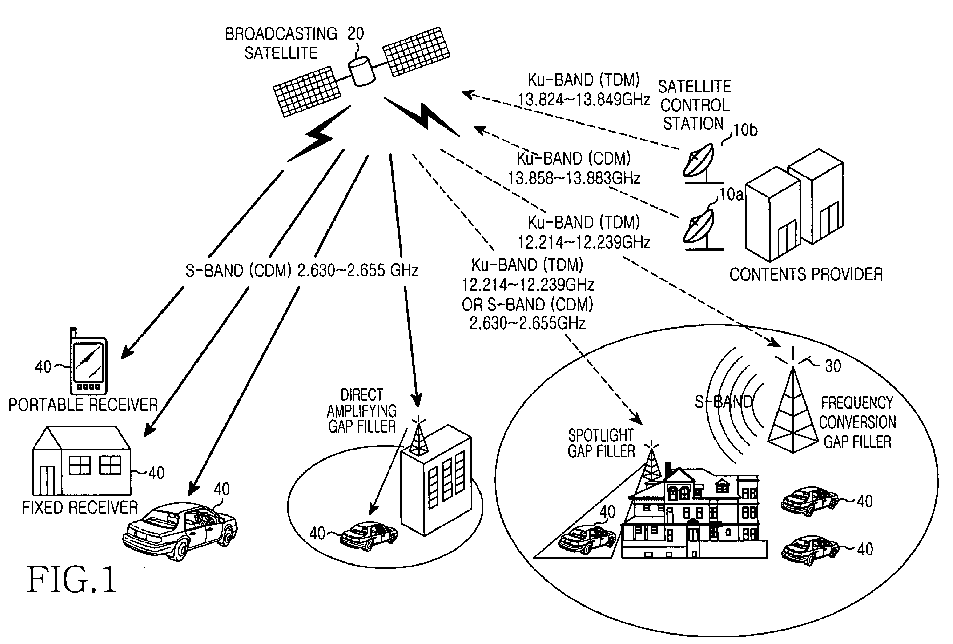

Fig. 1 is a schematic diagram illustrating a conventional satellite DMB system.

Referring to Fig. 1, a contents provider 10a or a satellite control station 10b contained in the conventional satellite DMB system compresses broadcast data including area-specialized additional information, multiplexes the compressed broadcast data, and transmits the multiplexed broadcast data to a satellite 20 according to a TDM (Time Division Multiplexing) scheme using a KU-band frequency band ranging from 13.824 to 13.849 GHz and a CDM (Code Division Multiplexing) scheme using a KU-band frequency band ranging from 13.858 to 13.883 GHz.

Data for use in a digital broadcast system is transmitted in TS (Transport Stream)-packet units, and a single frame is composed of a predetermined number of TS packets. Each TDM frame is composed of unit frames each having a predetermined size of 25.5 milliseconds (msec), and a single unit frame is composed of two 12.75 msec CDM frames. The satellite control station 10b performs a TDM operation on 32 unit frames each having the size of 25.5 msec, and the TDM-processed unit frames to the satellite 20. The satellite 20 receives TDM/CDM broadcast signals, and performs frequency conversion of the received TDM/CDM broadcast signals. The satellite 20 transmits the TDM broadcast signal to a gap filler 30 over a KU-band ranging from 12.214 to 12.239 GHz, and transmits the CDM broadcast signal to a receiver 40 over an S-band ranging from 2.630 to 2.655 GHz. The receiver 40 can include a user terminal, for example, a mobile terminal such as a DMB mobile phone, a home fixed terminal, or a terminal for use in vehicles, etc.

The gap filler 30 demodulates the TDM broadcast signal received from the satellite 20. The gap filler 30 finds a frame edge part from the demodulated TDM broadcast signal, and divides received data into pilot channel data, common channel data, and individual broadcast channel data.

The divided pilot channel data, common channel data, and individual broadcast channel data are modulated and converted into CDM broadcast signals, and are transmitted to the receiver 40. The receiver 40 demodulates the CDM broadcast signal generated from the satellite 20 and the gap filler 30, and outputs broadcast information to subscribers. The gap filler 30 receives a signal transmitted from the satellite 20, amplifies the signal and re-transmits the amplified signal, such that it can improve signal reception characteristics in a prescribed area having a deteriorated signal reception environment.

The broadcast information is transmitted to numerous receivers dispersed over a geographically wide area. However, it may be preferable for the DMB system to transmit regional information associated with a prescribed area only to specific receivers. In more detail, specific information associated with a specific area, for example, regional news and weather information, and regional traffic and advertisement information, etc., may be available for receivers (i.e., subscribers or users carrying their receivers) located in the specific area, but there is no need for other receivers located in other areas to use the specific information. Therefore, there is required a regional information provision service system capable of transmitting additional information broadcast data specialized for a corresponding area to only necessary receivers.

According to the conventional digital broadcast system for providing users or subscribers with area-specialized additional information broadcast data, the satellite control station assigns a unique area ID (Identification) code to each of area-specialized additional information broadcast data, and transmits the area-specialized additional information broadcast data assigned the unique area ID code. The receiver detects additional information broadcast data specialized for a specific area on the basis of the area ID code selected by the subscriber, and displays the detected additional information broadcast data. Therefore, the subscriber or user requires an additional selection process to hear or view area-specialized additional information broadcast data associated with his or her current position. However, provided that the subscriber or user receives the digital broadcast data while in motion, the conventional digital broadcast system has difficulty in selecting correct area-specialized additional information broadcast data when his or her current position is frequently changing.

To solve the aforementioned problems, there has been recently proposed an improved system for automatically selecting area-specialized additional information broadcast data associated with a receiver's position from among a plurality of area-specialized additional information broadcast data. However, this improved system also has a disadvantage in that it should contain an additional device for recognizing a current position of the receiver, resulting in an increased size of the receiver. Furthermore, the aforementioned improved system must control the receiver to carry out a prescribed operation for selecting desired area-specialized additional information broadcast data according to the receiver's current position, resulting in an increased number of calculations and amount of power consumption.

### SUMMARY OF THE INVENTION

Therefore, the present invention has been made in view of the above problems, and it is an object of the present invention to provide a DMB system for providing area-specialized additional information broadcast data and an additional information service method using the DMB system, which can automatically set up additional information broadcast data specialized for individual areas, and minimize the load on a receiver.

It is another object of the present invention to provide a DMB system and additional information service method using the same, which can transmit area-specialized additional information broadcast data only to receivers located in a prescribed area.

In accordance with the present invention, the above and other objects can be accomplished by the provision of a digital broadcast apparatus, comprising: a transmitter for multiplexing area-specialized additional information broadcast data containing an area ID code along with general broadcast data, and transmitting the multiplexed area-specialized additional information broadcast data and the general broadcast data over a prescribed channel or a general broadcast channel; a gap filler for detecting the area ID code from among the received broadcast data, determining whether the detected area ID code is equal to additional information broadcast data specialized for a desired area, amplifying power levels of the received broadcast data and the general broadcast data when the received broadcast data means an area-specialized additional information broadcast signal, and transmitting the amplified broadcast data and general broadcast data; and a receiver for receiving area-specialized additional information broadcast data from the gap filler, and displaying the received broadcast data.

### BRIEF DESCRIPTION OF THE DRAWINGS

The above and other objects, features and other advantages of the present invention will be more clearly understood from the following detailed description taken in conjunction with the accompanying drawings, in which:
- Fig. 1: is a schematic diagram illustrating a conventional satellite DMB system;
- Fig. 2: is a conceptual diagram illustrating a Transport Stream (TS) structure of a channel for use in a satellite DMB system in accordance with a preferred embodiment of the present invention;
- Fig. 3a: is a conceptual diagram illustrating a first structure of data transferred over satellite DMB channels in accordance with a preferred embodiment of the present invention;
- Fig. 3b: is a conceptual diagram illustrating a second structure of data transferred over satellite DMB channels in accordance with a preferred embodiment of the present invention;
- Fig. 4: is a block diagram illustrating a satellite DMB gap filler for transmitting area-specialized additional information broadcast data to a user terminal in accordance with a preferred embodiment of the present invention;
- Fig. 5: is a block diagram illustrating a satellite DMB receiver in accordance with a preferred embodiment of the present invention; and
- Fig. 6: is a flow chart illustrating a method for controlling a satellite DMB gap filler to transmit area-specialized additional information broadcast data received from the satellite control station to a user terminal in accordance with a preferred embodiment of the present invention.

### DETAILED DESCRIPTION OF THE PREFERRED EMBODIMENTS

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted to avoid making the subject matter of the present invention unclear.

Prior to describing the present invention, it is assumed that area-specialized additional information broadcast data for use in a satellite DMB system is assigned a specific CDM channel, and the area-specialized additional information broadcast data assigned a specific CDM channel is transmitted to a desired terminal. However, it should be noted that a channel over which the area-specialized additional information broadcast data is transmitted is changed corresponding to a variety of broadcast standards. In other words, it should be noted that the area-specialized additional information broadcast data according to the present invention can be transmitted over an unspecified CDM channel, be distributed among several broadcast channels changing every moment according to channel configuration information of a pilot channel, or be transmitted over such several broadcast channels, such that it is made available for a variety of application methods. A reference symbol "CDM #n" indicates the number of a CDM channel, and is classified by Walsh codes. The reference symbol "CDM #n" indicates a program number for use in the MPEG (Moving Picture Expert Group) 2-TS standard. In this case, the term "Program" means a single channel for providing analog broadcast data, and indicates the set of elementary streams (ESs) sharing the same time reference value.

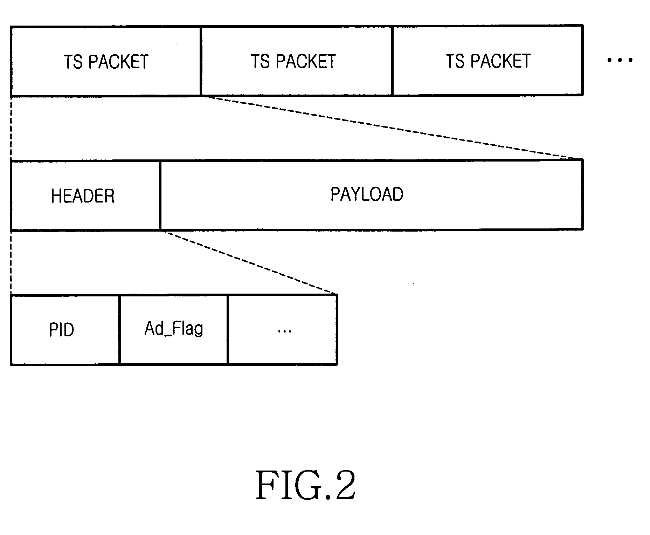

Fig. 2 is a conceptual diagram illustrating a TS structure of a channel for use in a satellite DMB system in accordance with a preferred embodiment of the present invention.

The TS (Transport Stream) is composed of a plurality of TS packets. Each TS packet of video, audio, and text data is composed of 188 bytes of fixed-length data. The length of the TS packet is determined considering matching characteristics associated with the length of an ATM (Asynchronous Transfer Mode) cell and applicability associated with an ECC (Error Correction Code) operation such as a Reed-Solomon code operation. The TS packet is composed of a header having a fixed length of 4 bytes and an adaptation field and payload having a variable length. The header includes program information constructing an overall stream, time information of a program, and control information for controlling an overall system, etc. Particularly, the header is adapted to define a PID (Packet Identification), such that a variety of categories of TS packets are identified using the PID. Either one of the adaptation field and the payload may be found or all of the adaptation field and the payload may also be found. The presence or absence of the adaptation field and payload can be recognized by a flag AD_Flag (adaptation_field_control) contained in the header. In accordance with a preferred embodiment of the present invention, the flag Ad_Flag can indicate the fact that an area ID code is contained in a prescribed area of the adaptation field.

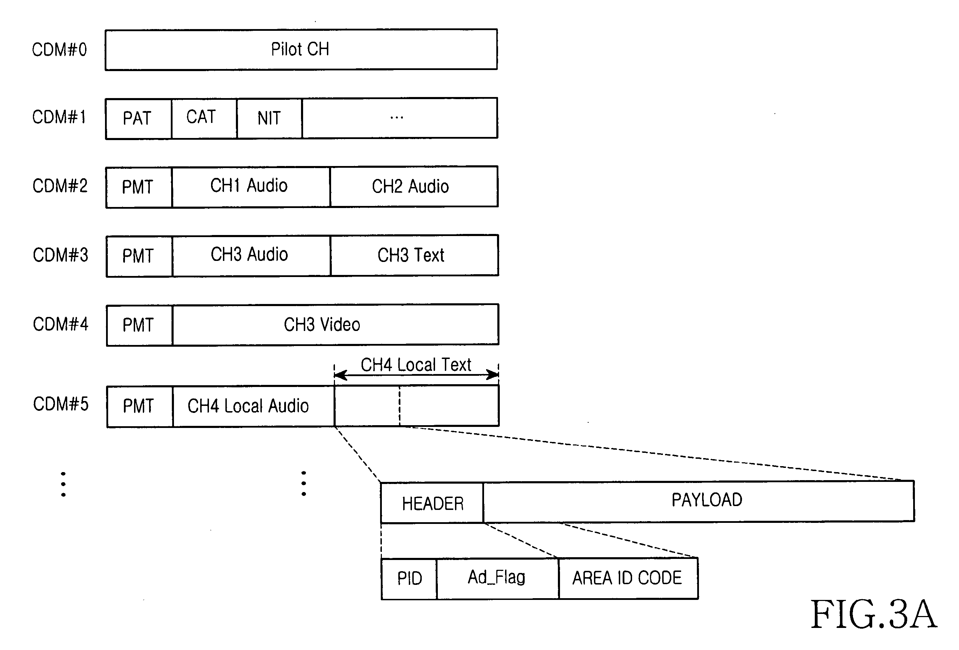

Fig. 3a is a conceptual diagram illustrating a first structure of data transferred over satellite DMB channels in accordance with a preferred embodiment of the present invention.

A pilot channel transmits CDM channel configuration information and synchronization information with an appropriate number of frequencies. Typically, the satellite DMB system assigns the CDM#0 channel to such a pilot channel.

The CDM#1 channel is adapted to transmit common information such as Program Specific Information (PSI) or broadcast channel information. The PSI is composed of four tables, i.e., a Program Association Table (PAT), a PMT (Program Map Table), a CAT (Conditional Access Table), and a Network Information Table (NIT). It is assumed that remaining tables PAT, CAT, and NIT other than the PMT are transmitted over the CDM#1 channel in the present invention.

The remaining channels CDM#2 ~CDM#5 other than the CDM#1 channel are adapted to transmit broadcast data. Fig. 3a shows a prescribed broadcast service case during which audio, text, and video information of two channels CDM#3 and CDM#4 configures a program of a third broadcast channel CH3, and the configured program is transmitted to a subscriber or user. Area-specialized additional information broadcast data is transmitted over the CDM channels. It is assumed that area-specialized additional information broadcast data is transmitted over the CDM#5 channel in the present invention.

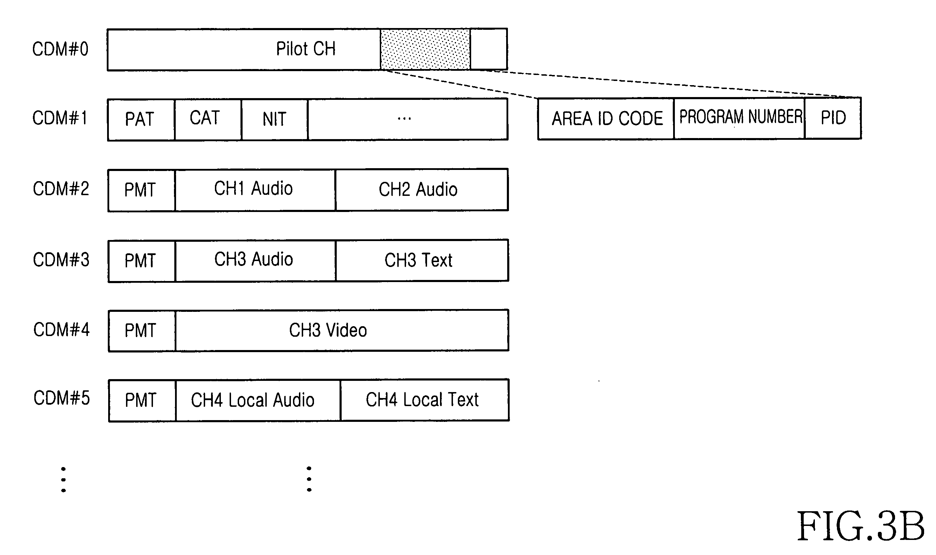

Fig. 3b is a conceptual diagram illustrating a second structure of data transferred over satellite DMB channels in accordance with a preferred embodiment of the present invention.

In accordance with a preferred embodiment of the present invention, an area ID code is contained in a reserved part of the pilot channel along with a program number and a PID. A gap filler for use in the present invention identifies broadcast data of the CDM#5 channel over which area-specialized additional information is transmitted with reference to a variety of information transmitted over the pilot channel, for example, channel construction information, area ID code, program number, and PID information, etc., such that it can determine whether reception information is additional information specialized for a corresponding geographical area.

Although the aforementioned description has exemplarily disclosed a method for transmitting an area ID code, it should be noted that this method can be modified and applied in various ways to meet individual purposes of broadcast program producers. For example, the present invention may add an area ID code to PAT or PMT, etc.

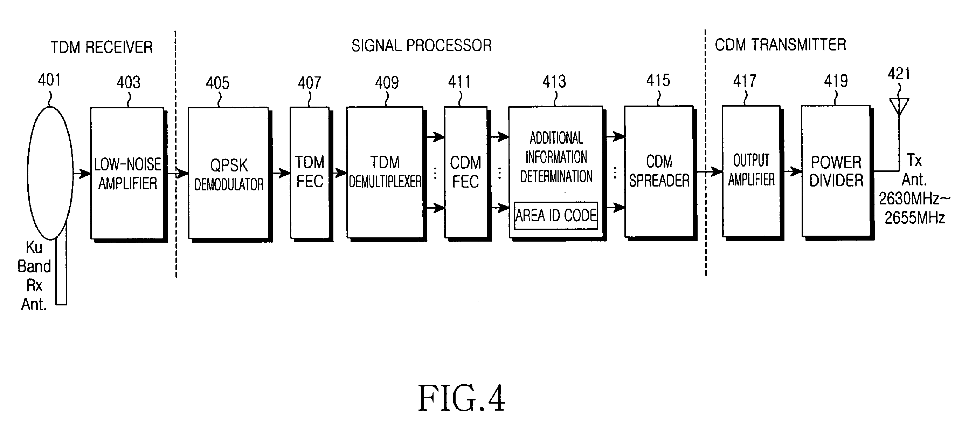

Fig. 4 is a block diagram illustrating a satellite DMB gap filler for transmitting area-specialized additional information broadcast data to a user terminal in accordance with a preferred embodiment of the present invention.

Referring to Fig. 4, if a KU-band reception antenna 401 receives a TDM signal, the received TDM signal is sequentially transmitted to a low-noise amplifier 403 and a QPSK demodulator 405, and a TDM FEC (Forward Error Correction) unit 407, such that the TDM FEC unit 407 corrects errors generated during data transmission due to noise or interference. A TDM demultiplexer 409 finds a frame edge part from among the decoded TDM broadcast signal, and separates pilot channel data, common channel data, and individual broadcast channel data from reception data.

Separated channel data is stored in buffers (not shown) for every CDM channel. In this case, data sequentially generated on the basis of a time axis is considered to be parallel to buffers for every CDM channel, that is, the data has a serial-to-parallel relationship with the individual CDM channel buffers. If individual corresponding frames are collected, the TDM demultiplexer 409 outputs the collected frames to a CDM FEC unit 411. Thereafter, the CDM FEC unit 411 corrects errors generated during transmission due to noise or interference. An additional information determination unit 413 determines the presence or absence of corresponding area information to be transmitted on the basis of area ID codes pre-assigned to individual gap fillers.

As can be seen from the aforementioned preferred embodiment shown in Fig. 3A, the additional information determination unit 413 recognizes the fact that the CDM#5 channel serves as an area-specialized additional information broadcast channel by referring to CDM channel construction information of the pilot channel. The additional information determination unit 413 checks an area ID code of the area-specialized additional information broadcast data header. If it is determined that the checked area ID code is not desired area-specialized additional information broadcast data, the additional information determination unit 413 deletes reception data associated with the checked area ID, resulting in no output data. Otherwise, if it is determined that the checked area ID code is desired area-specialized additional information broadcast data, the additional information determination unit 413 outputs reception data to a CDM spreader 415 along with other broadcast channel data, common channel data, and pilot channel data, etc.

Referring to the preferred embodiment shown in Fig. 3b, the additional information determination unit 413 checks CDM channel construction information of the pilot channel and an area ID code inserted into a reserved part of the pilot channel, and determines whether data of the CDM#5 channel over which area-specialized additional information broadcast data is currently transmitted is equal to additional information broadcast data specialized for a specific geographic area. In this case, if it is determined that the CDM#5 channel data is different from the additional information broadcast data specialized for the specific geographic area, the additional information determination unit 413 deletes the CDM#5 channel data. Otherwise, if it is determined that the CDM#5 channel data is determined to be the additional information broadcast data specialized for the specific geographic area, the additional information determination unit 413 outputs the CDM#5 channel data to the CDM spreader 415 along with other broadcast channel data and control channel data.

Provided that an area ID code is assigned to PAT or PMT as described above, the additional information determination unit 413 recognizes a CDM channel over which area-specialized additional information broadcast data is transmitted upon receipt of CDM channel construction information transmitted over the pilot channel and program specific information transmitted over the common channel, and checks PAT or PMT. Upon receiving the checked result of the PAT or PMT, if it is determined that corresponding data is additional broadcast data specialized for a desired area, the desired geographic area-specialized additional information broadcast data may be transmitted to the CDM spreader 415 along with other broadcast channel data, common channel data, and pilot channel data, etc.

Identified area-specialized additional information broadcast data, other broadcast channel data, and control channel data are transmitted to the CDM spreader 415, and are spread and modulated by different spreading codes. The spreading code is assigned to individual channels, and uses Walsh codes. The spread-modulated data is summed up in the form of a single code division multiplexing broadcast signal, and the code division multiplexing broadcast signal is modulated using a digital modulation scheme such as a QPSK or QAM (Quadrature Amplitude Modulation) scheme. An output amplifier 417 converts the modulated broadcast signal into a frequency signal for wireless transmission, amplifies the frequency signal to a transmission power level, transmits the amplified signal to a power divider 419, and transmits the output signal of the power divider 419 over an antenna 421.

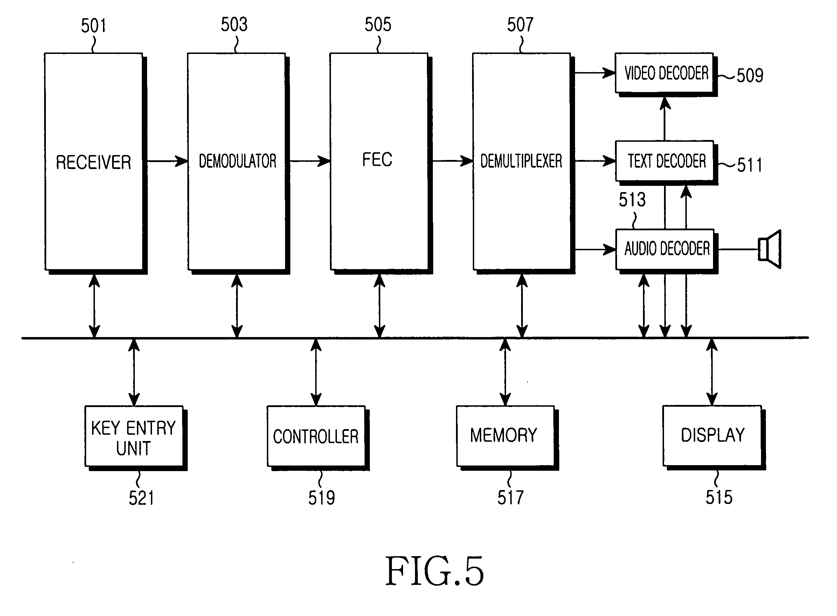

Fig. 5 is a block diagram illustrating a satellite DMB receiver 40 in accordance with a preferred embodiment of the present invention.

Referring to Fig. 5, a receiver 501 receives a transmission DMB signal, low-noise amplifies the received DMB signal, and converts the low-noise-amplified DMB signal into an IF (Intermediate Frequency) signal using a frequency conversion process. A demodulator 503 demodulates the frequency-converted broadcast signals, and performs spectrum despreading on the demodulated result signals using a spreading code associated with a channel selected by a subscriber. FEC (Forward Error Correction) unit 505 corrects errors generated during transmission due to noise or interference. A demultiplexer 507 receives PID information from a controller 519, extracts desired TS data from decoded TS data using the PID information, and separates audio, video, and text data from the extracted TS data.

Particularly, the demultiplexer 507 and the controller 519 for use in the present invention do not carry out additional determination and fabrication processes on received area-specialized additional information broadcast data, and output data of the prescribed CDM#5 channel when a subscriber wishes to view an area-specialized additional information broadcast program. Therefore, there is no need for the receiver 40 to check the amplified broadcast received from the gap filler 30 to constantly determine whether data of the CDM#5 channel used for area-specialized additional information broadcast data transmission is data of other area where the subscriber does not currently exist. The subscriber's receiver 40 need not additionally acquire ID information of a prescribed area where the subscriber currently exists, and there is no need for the subscriber to additionally enter a corresponding unique area ID code. Audio, video, and text data separated from the demultiplexer 507 are transmitted to an audio decoder 513, a video decoder 509, and a text decoder 511, respectively.
The audio decoder 513 decodes compressed audio data, converts the compressed audio data into an analog signal using a D/A (Digital-to-Analog) converter (not shown), and transmits the analog signal to a speaker. The video decoder 509 decodes compressed video data, converts the decoded video data into a prescribed format suitable for a display 515 using a video processor (not shown), and outputs the resultant data to the display 515. The text decoder 511 decodes compressed text data. The decoded text data is displayed on the display 515 along with the video data.

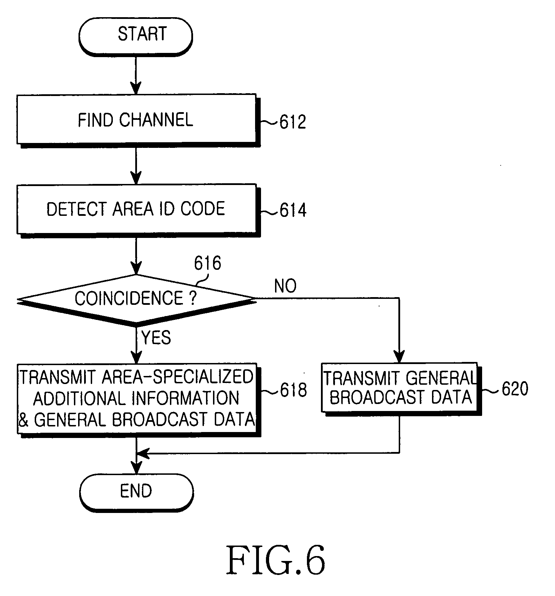

Fig. 6 is a flow chart illustrating a method for controlling a satellite DMB gap filler 30 to transmit area-specialized additional information broadcast data received from the satellite control station 10 to a user terminal 10 in accordance with a preferred embodiment of the present invention.

One of the methods for controlling the gap filler 30 to transmit area-specialized additional information broadcast data received from the satellite control station 10 to the user terminal 40 will hereinafter be described with reference to Figs. 1, 3a, and 6.

Referring to Fig. 6, if the satellite control station 10 assigns area-specialized additional information broadcast data to at least one of several broadcast channels, and transmits the area-specialized additional information broadcast data, the gap filler 30 finds a channel containing the area-specialized additional information broadcast data from among a plurality of broadcast channels at step 612. As can be seen from Fig. 3a, the found channel is the CDM#5 channel. The gap filler 30 detects an area ID code from among the TS data of the CDM#5 channel at step 614, compares the detected area ID code with a prestored area ID code, and determines whether the detected area ID code is equal to the prestored area ID code at step 616, such that it can determine whether desired area-specialized additional information broadcast data is currently transmitted.

Upon receiving the result of the comparison, if it is determined that the area-specialized additional information broadcast data corresponds to desired area-specialized additional information broadcast data, the gap filler 30 transmits the area-specialized additional information broadcast data to the user terminal 40 along with general broadcast data at step 618. Otherwise, if it is determined that the area-specialized additional information broadcast data is different from desired area-specialized additional information broadcast data, the gap filler transmits only general broadcast data at step 620.

Although the preferred embodiments of the present invention have been disclosed for illustrative purposes, they can be modified in various ways if needed without departing from the scope and spirit of the invention as disclosed in the accompanying claims.

For example, the present invention can be readily applied to all kinds of digital broadcast systems each comprised of a satellite control station, a gap filler, and a receiver even though the digital broadcast systems use different data transmission schemes. In such cases, the satellite control station assigns additional area ID codes to individual area-specialized additional information broadcast data, and transmits the area-specialized additional information broadcast assigned the additional area ID codes over a prescribed transmission channel. The gap filler receives the broadcast signal from the satellite control station, and determines whether the area ID code is contained in the received broadcast signal. If it is determined that the determined area ID code is equal to desired area-specialized additional information broadcast data, the gap filler amplifies the received broadcast signal, and transmits the amplified broadcast signal to a shadow area. The receiver receives the transmitted broadcast signal, and displays the area-specialized additional information broadcast data.

As apparent from the above description, a satellite DMB system according to the present invention provides a user or subscriber with area-specialized additional information broadcast data using a gap filler, such that it can reduce the size of a user terminal, the number of calculations, and power consumption. In addition, the satellite DMB system can provide the subscriber, regardless of whether the subscriber is in motion, with his or her desired area-specialized additional information broadcast data, resulting in greater convenience for the subscriber.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A digital broadcast apparatus for providing area-specialized additional information broadcast data, comprising:
a transmitter for assigning area-specialized additional information broadcast data containing an area ID (Identification) code to at least one of a plurality of broadcast channels, and transmitting the area-specialized additional information broadcast data;
a gap filler for receiving the area-specialized additional information broadcast data, determining whether the area ID code contained in the received area-specialized additional information broadcast data corresponds to an ID code of a desired area, and transmitting additional information broadcast data specialized for the desired area to a shadow area if it is determined that the area ID code corresponds to the desired area ID code; and
a receiver for receiving the area-specialized additional information broadcast data from the gap filler.

2. The apparatus as set forth in claim 1, wherein the gap filler includes:
a receiver for receiving the area-specialized additional information broadcast data;
an additional information determination unit for detecting an area ID code from among the received area-specialized additional information broadcast data, comparing the detected area ID code with the desired area ID code, determining whether the received area-specialized additional information broadcast data is equal to additional information broadcast data specialized for the desired area, and determining whether to transmit or block the received area-specialized additional information broadcast; and
a transmitter for transmitting the additional information broadcast data upon receiving the determination result from the additional information determination unit.

3. The apparatus as set forth in claim 1, wherein the area-specialized additional information broadcast data is determined to be additional information broadcast data of the desired area on the basis of the area ID code.

4. The apparatus as set forth in claim 3, wherein the transmitter attaches the area ID code to the area-specialized additional information broadcast data, and transmits the area-specialized additional information broadcast data containing the area ID code to the gap filler.

5. The apparatus as set forth in claim 3, wherein the area ID code is inserted into a prescribed part of a TS (Transport Stream) packet of the area-specialized additional information broadcast data.

6. The apparatus as set forth in claim 3, wherein the area ID code is inserted into a prescribed part of an additional information TS packet of a pilot channel.

7. The apparatus as set forth in claim 3, wherein the area ID code is inserted into a prescribed part of a TS packet of Program Specific Information (PSI).

8. The apparatus as set forth in claim 4, wherein the transmitter compresses the area-specialized additional information broadcast data and general broadcast data, multiplexes the compressed area-specialized additional information broadcast data and general broadcast data, and transmits the multiplexed area-specialized additional information broadcast data and general broadcast data over the same channel at the same time.

9. A method for carrying out an area-specialized additional information broadcast service in a digital broadcast system which includes a satellite control station for assigning area-specialized additional information broadcast data to at least one of several broadcast channels, and transmitting the assigned area-specialized additional information broadcast data, and a gap filler for receiving the assigned area-specialized additional information broadcast data from the satellite control station, said method comprising the steps of:
controlling the gap filler to find a channel receiving the area-specialized additional information broadcast data from among the broadcast channels;
determining whether the found channel transmits additional information broadcast data specialized for a desired area; and
if it is determined that the found channel transmits additional information broadcast data specialized for the desired area, transmitting the area-specialized additional information broadcast data to a user terminal.

10. The method as set forth in claim 9, further comprising the step of:
if it is determined that the found channel transmits additional information broadcast data specialized for the desired area, transmitting general broadcast data along with the area-specialized additional information broadcast data.

11. The method as set forth in claim 9, further comprising the step of:
if it is determined that the found channel does not transmit additional information broadcast data specialized for the desired area, transmitting general broadcast data without transmitting the area-specialized additional information broadcast data.

12. The method as set forth in claim 9, wherein the area-specialized additional information broadcast data is determined to be additional information broadcast data of the desired area on the basis of an area ID code, wherein the area ID code is inserted into a prescribed part of a TS (Transport Stream) packet.

13. The method as set forth in claim 9, wherein the area-specialized additional information broadcast data is determined to be additional information broadcast data of the desired area on the basis of an area ID code, wherein the area ID code is inserted into a prescribed part of a pilot channel contained in the broadcast channels.

14. The method as set forth in claim 9, wherein the area-specialized additional information broadcast data is determined to be additional information broadcast data of the desired area on the basis of an area ID code, wherein the area ID code is inserted into a prescribed part a PSI (Program Specific Information) TS packet.

15. A method for carrying out an area-specialized additional information broadcast service in a digital broadcast system for controlling a gap filler to receive a TDM (Time Division Multiplexing) signal from a satellite control station on the condition that a satellite control station of the digital broadcast system assigns area-specialized additional information broadcast data to at least one of a plurality of broadcast channels, and performs TDM (Time Division Multiplexing) and coding processes on the assigned area-specialized additional information broadcast data to generate the TDM signal, said method comprising the steps of:
a) receiving the TDM signal, performing TDM modulation and decoding operations on the received TDM signal, and detecting a frame edge part of a TDM frame;
b) dividing the detected frame into code division multiplexing (CDM) channel data;
c) analyzing the divided channel data information, and determining whether additional information broadcast data specialized for a desired area exists in data of the broadcast channels; and
d) if it is determined that the additional information broadcast data specialized for the desired area exists in the data of the broadcast channels, performing CDM modulation and coding operations on the additional information broadcast data specialized for the desired area, and transmitting the resultant signal in the form of a CDM signal to a user terminal.

16. The method as set forth in claim 15, further comprising:
e) if the additional information broadcast data specialized for the desired area is determined, performing CDM modulation and coding operations on the area-specialized additional information broadcast data and general broadcast data, and transmitting the resultant signal in the form of a CDM signal.

17. The method as set forth in claim 15, further comprising:
f) if the additional information broadcast data specialized for the desired area is not determined, performing CDM modulation and coding operations on only general broadcast data, and transmitting the resultant signal in the form of a CDM signal.

18. The method as set forth in claim 15, wherein step (c) further comprises:
c1) comparing an area ID code prestored in the gap filler with a received area ID code, and determining whether the prestored area ID code is equal to the received area ID code.

19. The method as set forth in claim 18, wherein the received area ID code is inserted into a prescribed part of a TS (Transport Stream) packet of the area-specialized additional information broadcast data.

20. The method as set forth in claim 18, wherein the received area ID code is inserted into a prescribed part of an additional information TS packet of a pilot channel contained in the broadcast channels.

21. The method as set forth in claim 18, wherein the received area ID code is inserted into a prescribed part of a TS packet of Program Specific Information (PSI).

22. A gap filler comprising:
a receiver for receiving, from among a plurality of broadcast channels, area-specialized additional information broadcast data and an area ID (Identification) code;
an additional information determination unit for detecting the area ID code, comparing the detected area ID code with a prestored area ID code and determining whether or not the received area-specialized additional information broadcast data is to be broadcast in a desired area; and
a transmitter for transmitting the area-specialized additional information broadcast data determined to be broadcast in the desired area.
